Europäisches Patentamt

European Patent Office

Office européen des brevets

(11) Publication number: **0 117 040**
A1

## (12) EUROPEAN PATENT APPLICATION

(21) Application number: 84300182.7

(22) Date of filing: 12.01.84

(51) Int. Cl.³: **F 16 K 5/06**

(30) Priority: 13.01.83 US 457702

(43) Date of publication of application:
29.08.84 Bulletin 84/35

(84) Designated Contracting States:
AT BE CH DE FR GB IT LI LU NL SE

(71) Applicant: Cameron Iron Works, Inc.
P.O. Box 1212
Houston Texas 77251(US)

(72) Inventor: Randall, Ross D.
34 Charleston N. Sugarland
Fort Bend County, Texas(US)

(74) Representative: Smith, Norman Ian et al,
F.J. CLEVELAND & COMPANY 40-43 Chancery Lane
London WC2A 1JQ(GB)

(54) Ball valves.

(57) A ball valve 10 has a body 12 with a chamber 18 therein and an inlet 14 and an outlet 16 communicating through the body into the chamber. A ball valve member 20 is positioned in the chamber and has a bore 22 therethrough to open or close flow between the inlet 14 and the outlet 16 and seat seal assemblies 24 surround the opening of the inlet and the outlet into the chamber and seal against the ball valve member. The seat seal assemblies 24 each include a rigid ring 26 with body sealing means 46 on one face of the ring, sealing means 60 on the ring for sealing against a surface surrounding the ring and a frusto-conical resilient ball seal ring 52 secured to the other face of the ring and extending outward to seal against the exterior of the ball valve member.

Fig. 1

EP 0 117 040 A1

DESCRIPTION

Background

Seat seals for ball valves have not always been satisfactory. Some ball valve seat seals have involved small metal parts which can be damaged when contacted by corrosive fluids. Other seat seals have been subjected to flow past them on initial opening or on closing which subjects them to damage or blowout.

One example of a ball valve having a combined seat seal assembly with a metal ring and resilient seals for sealing against the ball and the body is shown in U.S. Pat. No. 3,589,674.

It has sometimes been attempted to utilize the pressure flowing into the valve to energize or increase the sealing force on the seat seal by allowing leakage into the valve chamber behind the seat seal, as shown in U.S. Pat. No 3,233,862. The disadvantage of such structure is that such increased pressure is held in the chamber and also that the seal ring may be subject to blowout because of high velocity flow over the seal during movement of the ball.

Summary

The present invention provides an improved ball valve having seat seals including a metal ring having a body seal recess facing the body sealing surface with a resilient body seal ring in the body seal recess and a frusto-conical resilient ball seal ring having its inner diameter secured to the other side of the metal ring from the recess and extending outward into engagement with the ball.

An object of the present invention is to provide an improved ball valve having a seat seal which utilizes pressure in the valve to retain the ball sealing ring in sealing engagement with the ball.

Another object is to provide an improved ball valve having seals which are not subject to blowout during movement of the ball valve member.

A further object is to provide an improved ball valve with seat seals which are not subject to corrosion.

Brief Description of the Drawings

These and other objects and advantages are hereinafter set forth and explained with reference to the drawings wherein:

FIGURE I is a sectional view of the improved ball valve of the present invention.

FIGURE 2 is a sectional view of one form of improved seat seal ring assembly of the present invention .

FIGURE 3 is a sectional view of a modified form of improved seat seal ring assembly of the present invention.

Description of the Preferred Embodiments

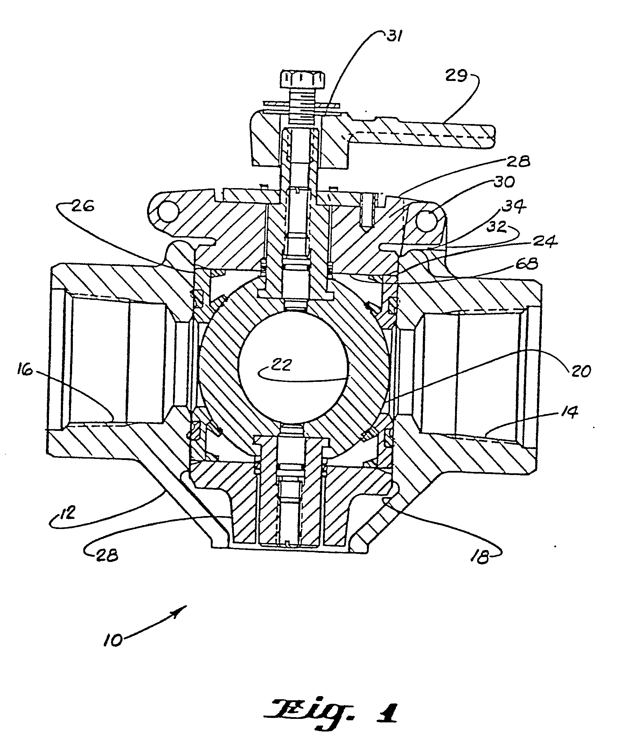

Ball valve 10 shown in FIGURE 1 illustrates the improved ball valve of the present invention. Ball valve 10 includes body 12 having inlet 14 and outlet 16 communicating with valve chamber 18. Ball or valve member 20 is positioned within valve chamber 18 and is supported therein for rotation to conduct flow through its bore 22 between inlet 14 and outlet 16 or to close such flow when it is in the position shown in FIGURE 1. Improved seat seal ring assembly 24 surrounds the opening of inlet 14 into valve chamber 18 and improved seat seal ring assembly 26 surrounding the opening of outlet 16 into valve chamber 18 and ball 20 is positioned between assemblies 24 and 26 as shown. Cage 28 surrounds ball 20 and assemblies 24 and 26 and positions them in chamber 18 so that bore 22 and the interiors of assemblies 24 and 26 are aligned with inlet 14 and outlet 16. The cage 28 closes the upper end of chamber 18 and is secured to body 12 by suitable securing means, such as pin 30 extending through yoke 32 and hasp 34. Handle 29 is secured to stem assembly 31 on ball 20 to rotate ball 20 to open or close flow between inlet 14 and outlet 16.

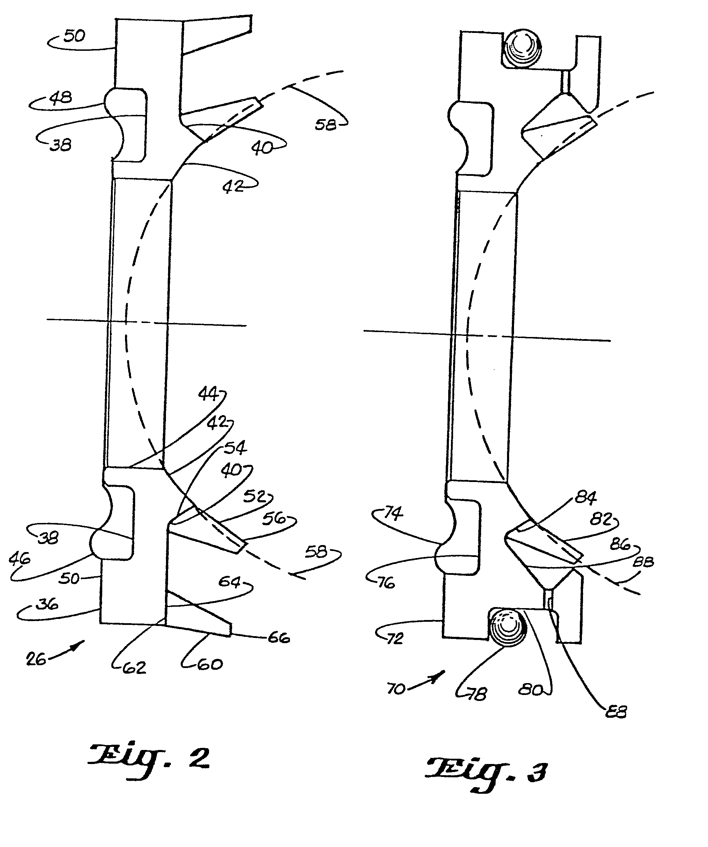

Seat seal ring assemblies 24 and 26 are identical but reversed as can be seen in FIGURE 1. Seat seal ring assembly 26, as shown in FIGURE 2, includes metal ring 36 having recess 38 on one side thereof and tapered shoulder 40 facing outward and away from ring 36. Surface 42 is arcuate preferably a segment of a sphere and extends from shoulder 40 to inner surface 44 of ring 36. Seal ring 46 is positioned in recess 38, may be molded therein or bonded therein and includes bulge 48 which extends beyond side surface 50 of ring 36. Ball seal ring 52 is frusto-conical in shape and tapers to have a smaller outer thickness than inner thickness. Inner surface 54 of ball seal ring 52 is bonded to surface 40. In its free position ball seal ring 52 has its outer sealing surface 56 extending inward of the position of the ball as shown by dashed lines 58. Seal ring 52 sealingly engages ball 20 when it is the downstream seal but when it is the upstream seal it has a loose engagement which allows fluid pressure to be transmitted between it and ball 20 into chamber 18 which pressure further increases the sealing force between the downstream seal ring 52 and ball 20. Cage seal ring 60 is another resilient ring which tapers from its base 62, which is bonded to the outer portion of side 64 of ring 36, to its outer end 66 which has a slightly larger diameter than the outer diameter of ring 36 so that it engages and seals against surface 68 of cage 28. Also any pressure in chamber 18 urges seal ring 60 into tighter sealing engagement with surface 68. Seal rings 46 and 60 are tight seals in both the upstream and downstream positions of seat seal assemblies 24 and 26.

The structure shown in FIGURE 3 is seat seal ring assembly 70 which includes metal ring 72, body seal ring 74 molded or bonded in recess 76, O ring 78 positioned in outer recess 80 and ball seal ring 82 bonded to shoulder 84 of recess 86. Body seal ring 74 is the same as seal ring 46 and ball seal ring 82 is the same as ball seal ring 52. Passages 88 provide communication between recesses 80 and 86. Pressure in chamber 18 is thus transmitted to urge O ring 78 and ball seal ring 82 into tighter sealing engagement with their respective sealing surfaces. Ball seal ring 82 is positioned in its free state to extend inward of the exterior of ball 20 as shown by dashed lines 88.

During opening as the edge between bore 22 and the exterior of ball 20 moves past the tip of ball seal ring 52 or 82 and exposes the inner surface thereof, the chamber pressure is applied to the inner surface but the same pressure already exists back of the seal so that the free part of the seal ring experiences no pressure difference. During closing as the ball edge approaches the seat seal ring, the flow is reduced

0117040

to low velocity leakage as the ball edge reaches the elastomer.  This small leakage is all that the seal has to stop.
As the ball movement proceeds, the free part of the seal has
no pressure difference on its faces, as the pressure difference develops on ball seal ring 52 or 82 it is supported by
the outer surface of ball 20.

0117040

CLAIMS

1. A valve having a body having a valve chamber with an inlet and an outlet extending through said body into said chamber, a ball valve member having a passage therethrough and positioned in said chamber, a seat seal assembly surrounding the opening of said outlet into said chamber, and characterized by said seat seal assembly including a rigid ring having a downstream side recess and an upstream outwardly and upwardly tapered shoulder, a body seal ring in said side recess to seal against said body around said outlet and a frusto-conical ball seal ring having its base secured to said shoulder and extending into sealing engagement with said ball valve member, said resilient ball sealing ring in its free state extending outward from said shoulder to ensure engagement with said valve member, means for conducting pressure from said inlet to the outer surface of said ball sealing ring.

2. A valve according to claim 1 wherein said seat seal assembly includes means for sealing between the outer surface of said rigid ring and a surface surrounding said outer surface.

3. A valve according to claim 2 wherein such sealing means includes a recess in said outer surface, and an O ring positioned in said outer surface recess.

4. A valve according to claim 2 wherein said sealing means includes a frusto-conical sealing ring bonded to the outer portion of the upstream side of said rigid ring and extend outward a sufficient distance to have sealing engagement with the surface surrounding said outer surface.

5.    A valve according to claim 1 including a second seat seal assembly surrounding the opening of said inlet into said chamber, said second seat seal assembly being identical with the outlet seat seat assembly.

6.    A seat seal assembly for a ball valve comprising a rigid ring having an inner surface, an outer surface, a first side and a second side, said inner and outer surfaces being generally cylindrical, said first side being flat and having a recess therein, said second side including an arcuate surface extending outward from said inner surface in a direction away from said first surface then tapers outward in the opposite direction to form a shoulder and then closes in a flat surface extending to said outer surface, a first seal ring positioned in said first surface recess, a frusto-conical seal ring having its inner end secured to said shoulder, and means on said rigid ring for sealing against a surface surrounding said outer surface.

7.    A seat seal assembly for a ball valve comprising a rigid ring having an inner surface, an outer surface, a first side and a second side, said inner and outer surfaces being generally cylindrical, said first side being flat and having a recess therein, said second side having a shoulder facing outward in a direction away from said first side, a first seal ring positioned in said first surface recess, a frusto-conical seal ring having its inner end secured to said shoulder, and means on said rigid ring for sealing against a surface surrounding said outer surface.

8.    A ball valve comprising a body having a valve chamber with an inlet and an outlet extending through said body into said chamber, a ball valve member having a bore therethrough positioned in said chamber, a seat seal assembly surrounding the opening of said outlet into said chamber, said seat seal assembly including a rigid ring, body sealing means on one face of said ring, a frusto-conical resilient ball sealing ring secured to the opposite face of said rigid ring and extending outwardly and sealing means for sealing between the exterior of said rigid ring and a sealing surface surrounding said seat seal assembly.

9.  A valve according to claim 8 including a second seat seal assembly surrounding the opening of said inlet into said chamber and being substantially identical to said seat seal assembly surrounding the opening of said outlet into said chamber.

10.  A seat seal assembly for a ball valve comprising a rigid ring sealing means on one face of said ring, sealing means on said ring for sealing against a surface surrounding said rigid ring, and a frusto-conical resilient ball sealing ring secured to the other face of said rigid ring and extending outward for sealing against a ball valve member.

11.  A valve substantially as described herein with reference to and as illustrated by the accompanying drawings.

Fig. 1

Fig. 2

Fig. 3

# EUROPEAN SEARCH REPORT

**European Patent Office**

**0117040**
Application number

EP 84 30 0182

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 177 833 (MORRISON) <br><br> * Figure 10 * | 1-3,5-10 | F 16 K 5/06 |
| A | US-A-4 099 705 (RUNYAN) <br><br> * Figure 1 * | 1-3,5-10 | |
| P,A | FR-A-2 513 343 (GACHOT) <br> * Figures 1, 3 * | 1,2,5 | |
| A | DE-U-7 533 090 (KITAZAWA SHOJI) | | |
| A | AT-B- 326 438 (ACF INDUSTRIES) | | **TECHNICAL FIELDS SEARCHED (Int. Cl. ³)** |
| A | US-A-3 228 652 (ANTRIM) | | F 16 K 5/00 |
| A | GB-A- 761 977 (SAUNDERS) | | |
| D,A | US-A-3 589 674 (JONES) | | |
| D,A | US-A-3 233 862 (MARSH) | | |

The present search report has been drawn up for all claims

| Place of search | Date of completion of the search | Examiner |
|---|---|---|
| BERLIN | 04-04-1984 | SCHLABBACH M |